# EUROPÄISCHE PATENTANMELDUNG

(11) **EP 2 533 612 A1**
(43) Veröffentlichungstag der Anmeldung: **12.12.2012**
(21) Anmeldenummer: 11169425.3
(22) Anmeldetag: 10.06.2011
(51) Int. Cl.: H05B 37/02, H02M 3/335

(54) **LED-Netzteilvorrichtung für nicht-aktivierten Ansteuerzustand**

(71) Anmelder: Exscitron GmbH, 09112 Chemnitz (DE)
(72) Erfinder: Gruber, Stephan, 09112 Chemnitz (DE); Franzky, René, 09113 Chemnitz (DE); Beyer, Winfried, 09116 Chemnitz (DE); Meyhöfer, Gerd, 01465 Dresden-Langenbrück (DE)
(74) Vertreter: Behrmann, Niels

(57) **Zusammenfassung**

Die Erfindung betrifft LED-Netzteilvorrichtung mit ausgangsseitig zum Ansteuern von eine Schwellenspannung (42) aufweisenden LED-Mitteln ausgebildeteten Netzteilmitteln (10, 12, 14, 18), denen eine eine Ansteuerschnittstelle (22, 24) für extern anlegbare Steuersignale ausbildende Steuereinheit (20) zugeordnet ist, die eine mit einem Anschluss der Netzteilmittel verbundene Spannungsversorgungseinheit (18) so aufweist, dass die Steuereinheit in einem aktivierten sowie nicht-aktivierten Ansteuerzustand der LED-Mittel mit einer Betriebsspannung für einen Dauerbetrieb der Steuereinheit versorgt werden kann. Erfindungsgemäß ist vorgesehen, dass dass die Betriebsspannung als Kondensatorspannung von ausgangsseitig der Netzteilmittel vorgesehenen Kondensatormitteln (18) abgegriffen wird, die durch Wirkung der Steuereinheit (20) so durch impulsförmiges Ansteuern der Netzteilmittel geladen werden, dass in dem nicht-aktivierten Ansteuerzustand eine maximale Lade- und/oder Kondensatorspannung unterhalb der Schwellenspannung (42) liegt.

## Beschreibung

Die vorliegende Erfindung betrifft eine LED-Netzteilvorrichtung nach dem Oberbegriff des Hauptanspruchs.

Eine derartige Vorrichtung ist in der EP 1 374 366 B1 beschrieben. In dieser Vorrichtung sind Netzteilmittel zum ausgangsseitigen Ansteuern eines Verbrauchers, etwa eines (LED) Leuchtmittels, zum Realisieren einer DALI-Schnittstelle (DALI = Digital adressable lighting interface, digital adressierbare Beleuchtungsschnittstelle) so verbunden, dass gemäß Spezifikationen des DALI-Standards eine Zweidraht-Steuerung genutzt werden kann, um angeschlossene Beleuchtungsvorrichtungen zu adressieren, anzusteuern und in ihrem jeweiligen Betriebsstatus zu überwachen.

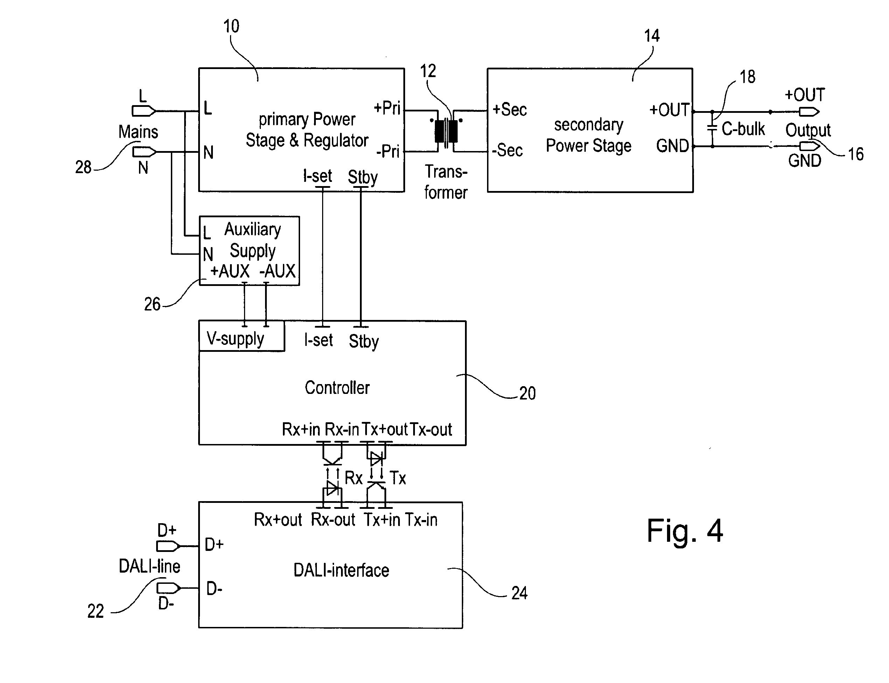

Eine derartige, als bekannt vorausgesetzte Anordnung zeigt die Fig. 4 zum Stand der Technik: Eine zweistufige Netzteilvorrichtung (als Netzteilmittel) bestehend aus einer geregelten und mit einer Leistungsfaktorkorrektur versehenen Primärstufe 10 sowie einer nachgeschalteten, über eine Transformatoreinheit 12 angekoppelten Sekundärstufe 14 wird ausgangsseitig (output 16) mit dem jeweiligen Verbraucher verbunden; ein ausgangsseitiger Glättungskondensator 18 sorgt ausgangsseitig für ein von Hochfrequenzkomponenten bereinigtes Gleichsignal. Die Anordnung aus Primär- sowie Sekundärstufe 10, 12, 14 wird primärseitig von einer Steuereinheit 20 angesteuert, welche ein, über einen DALI-Eingangsanschluss (DALI-Line) 22 angebundenes Schnittstellenmodul 24 aufweist. Zusätzlich ist der Steuereinheit 20 ein Spannungsversorgungsmodul 26 zugeordnet, welches Versorgungsspannung aus dem Netzteil-Eingangsanschluss (mains) 28 empfängt und so geschaltet ist, dass die Steuereinheit 20 im Dauerbetrieb gehalten werden kann.

Dies ermöglicht, dass jederzeit auf entsprechende Steuer-Abfrage- oder Statusbefehle über die DALI-Schnittstelle 22, 24 reagiert werden kann, insbesondere auch während eines deaktivierten Zustands der Netzteilmittel 10, 12, 14 (und mithin ausgangsseitig deaktiviertem Verbraucher).

Eine derartige Vorrichtung, welche das Grundprinzip der EP 1 374 366 B1 verkörpert, verwendet typischer Weise einen geeignet programmierten Mikrokontroller zur Realisierung der Steuereinheit 20 (bzw. der DALI-Schnittstelleneinheit 24), wobei die zugeordnete Spannungsversorgungseinheit 26, zu Realisierung des Dauerbetriebs, permanent elektrische Leistung aus dem Netzteileingang 28 entnimmt. Dies ist in doppelter Hinsicht nachteilig und potenziell verbesserungsbedürftig: Zum Einen verursacht die (dauerhafte) Spannungsversorgung der Steuereinheit 20 zusätzlichen konstruktiven bzw. schaltungstechnischen Aufwand, zum Anderen verschlechtert sich durch den permanenten elektrischen Leistungsverbrauch (insbesondere auch während der Auszeit-, Leerlauf- bzw. Standby-Betriebszustände eines ausgangsseitig 16 angeschlossenen Verbrauchers) die Energiebilanz einer so realisierten Steuervorrichtung, wobei dies insbesondere für solche Anordnungen kritisch ist, bei denen, relativ zu Aktivierungsphasen, lange Leerlauf- Standby- bzw. Ausschaltphasen vorhanden sind. Bezogen auf eine aus dem Netz aufgenommene mittlere Leistung können damit in Richtlinien vorgegebene Grenzen potenziell überschritten werden.

Aufgabe der vorliegenden Erfindung ist es daher, eine gattungsgemäße LED-Netzteilvorrichtung konstruktiv zu vereinfachen, dabei gleichzeitig für eine dauerhafte Betriebsbereitschaft der den Netzteilmitteln zugeordneten Steuereinheit zu sorgen (um insoweit die Vorrichtung insbesondere auch DALI-kompatibel zu machen). Dabei ist dann zusätzlich aufgabengemäß eine mittlere Leistungsaufnahme, insbesondere bei Vorrichtungen mit wechselndem Aktivierungs- und Deaktivierungs- (Stillstands-) Zeiten, zu senken.

Die Aufgabe wird durch die LED-Netzteilvorrichtung mit den Merkmalen des Hauptanspruchs gelöst. Vorteilhafte Weiterbildungen der Erfindung sind in den Unteransprüchen beschrieben.

In erfindungsgemäß vorteilhafter Weise wird, in Abkehr vom gattungsbildenden Stand der Technik, die Betriebsspannung für die Steuereinheit nicht eingangs- bzw. primärseitig der Netzteilmittel abgenommen, sondern ausgangsseitig, und zwar vorteilhaft als Kondensatorspannung eines Glättungs- und Pufferkondensators, welcher lastseitig am Netzteilausgang über der als LED-Mittel realisierten Last liegt. Erfindungsgemäß ermöglicht dies die Nutzung der Netzteilmittel-Ausgangsspannung zur Spannungsversorgung, so dass als "Spannungsversorgungseinheit" im Sinne der Erfindung, wiederum in Abkehr vom gattungsbildenden Stand der Technik, keine gesonderte Stromversorgungseinheit notwendig ist, vielmehr diese Stromversorgungseinheit durch geeignete Funktionalität der Netzteilmittel selbst realisiert ist. Konkret wird dabei die Eigenschaft der LED-Mittel als Last ausgenutzt, dass unterhalb der (durch die LED-Halbleiter bestimmten) Schwellenspannung die Leuchtmittel deaktiviert sind, also kein Leuchtbetrieb stattfindet. Gleichzeitig wird im Rahmen der Erfindung ein Ausgangsspannungssignal der Netzteilmittel (durch geeignete, pulsförmige Ansteuerung der Steuereinheit) benutzt, um — in diesem Leerlauf- bzw. Ausschaltbetrieb der LED-Leuchtmittel als Last - den ausgangsseitigen Glättungs- und Pufferkondensator so zu laden, dass dessen Kondensatorspannung, wenngleich unterhalb der LED-Leuchtmittel-Schwellenspannung, zum Aufrechterhalten des gewünschten Dauerbetriebs der Steuereinheit ausreicht.

Erfindungsgemäß vorteilhaft wird damit der typischerweise ohnehin vorhandene, kapazitiv groß dimensionierte Glättungskondensator am Ausgang zur zusätzlichen Spannungsversorgung der Steuereinheit verwendet, wobei, im Rahmen bevorzugter Ausführungsbeispiele, der Ladungszustand dieses ausgangsseitigen Kondensators (als Kondensatormittel im Rahmen der Erfindung) so mit Ladeimpulsen versehen wird, dass einerseits zum Aufrechterhalten des Ausschalt- bzw. Standbyzustandes, eine Kondensatorspannung die LED-Leuchtmittel-Schwellenspannung nicht erreicht, andererseits jedoch die Kondensatorspannung die zum Aufrechterhalten des Dauerbetriebs der Steuereinheit erforderlichen Mindestbetriebsspannung nicht unterschreitet.

Gemäß bevorzugten Realisierungsformen der Erfindung erfolgt, abhängig von einer jeweiligen Parametrisierung bzw. Konfiguration der Last aus LED-Mitteln, eine Ladung der ausgangsseitigen Kondensatormittel in Form von regelmäßigen, periodischen Ladeimpulsen, wobei typischerweise eine Impulsdauer derartiger Ladeimpulse, bezogen auf eine Periodenlänge, unterhalb 10%, weiter bevorzugt unterhalb 5% und noch weiter bevorzugt unterhalb 2%, jeweils bezogen auf die Periodenlänge, beträgt.

Besonders bevorzugt ist die Verwendung der vorliegenden Erfindung im Zusammenhang mit (LED-) Schaltnetzteilen, welche primärseitig einstufig ausgebildet sind und bevorzugt eine Leistungsfaktorkorrektur (PFC) aufweisen; eine an eine solche Primärstufe mittels einer Transformatoreinheit angekoppelte Sekundärstufe weist dann typischer Weise Gleichrichtmittel auf, denen dann der ausgangsseitige Kondensator als Glättungskondensator (und Pufferkondensator im Sinne der Erfindung) nachgeschaltet ist. Gerade im Hinblick auf die Einstufigkeit der Primärstufe, ist die vorliegende Erfindung besonders vorteilhaft, da damit der erforderliche Bauteile-und Steuerungsaufwand gegenüber herkömmlichen Konzepten erheblich reduziert wird. Damit ergeben sich merkliche Einsparungen bei den Netzteilkosten.

Vorteilhaft erfolgt zudem im Rahmen der Erfindung eine sekundärseitige (ausgangsseitige) Spannungsversorgung der Steuereinheit, welche es erforderlich macht, dass die Steuereinheit, beispielsweise über Optokoppler oder dergleichen, galvanisch getrennt (über eine entsprechend geeignete Steuerleitung) auf die Netzteilmittel an deren Primärstufe zugreift. Bei einem vom Netz galvanisch getrennten und entsprechend isolierten Ausgang ergibt sich die Möglichkeit, die Anzahl der in Reihe geschalteten LEDs so zu wählen, dass die Summenspannung den noch ais Schutzkleinspannung (SELV) geltenden Pegel von 60V DC nicht übersteigt. Dies vereinfacht (und verbilligt) damit die notwendige Montage der LED-Leuchtmittel auf einem Kühlkörper beträchtlich.

Während es zudem im Rahmen der Erfindung weiterbildungsgemäß besonders bevorzugt ist, der Steuereinheit eine DALI-Schnittstelle zuzuordnen bzw. die Steuereinheit zur Realisierung einer derartigen Schnittstelle auszugestalten (wobei insoweit die entsprechenden Hinweise gemäß EP 1 374 366 B1 zur DALI-Spezifikation als zur Erfindung gehörig in die vorliegende Erfindung einbezogen gelten sollen) ist es gleichwohl von der Erfindung umfasst und nützlich, die LED-Netzteilvorrichtung auch für andere Ansteuer- und/oder Schnittstellenkonfigurationen zu verwenden bzw. in Verallgemeinerung des Begriffes "LED-Mittel" auch solche Verbraucher als von der Erfindung mitumfasst anzusehen, welche, in der Art einer LED, eine Schwellenspannung aufweisen, unterhalb derer ein Betrieb nicht erfolgt, welche gleichwohl, in der erfindungsgemäßen Weise, das von einer Ausgangskapazität gepufferte Betreiben der zugeordneten Steuereinheit im Dauerbetrieb ermöglicht.

Während es im Rahmen der Erfindung prinzipiell möglich ist, die LED-(Leucht-) Mittel in Form einer Einzel- (Leistungs-) LED zu realisieren, ist es gleichwohl typisch und bevorzugt, eine Mehrzahl von LED-Halbleitern als Reihenschaltung zur Realisierung der Last auszubilden, wobei durch entsprechende Addition der jeweiligen Schwellenspannungen dann sich eine Gesamtschwellenspannung zur Dimensionierung und zum Betrieb der vorliegenden Erfindung ergibt. Dabei haben sich LED-Reihenschaltungen zwischen 3 und 20 Einzel-LED, bevorzugt zwischen 4 und 12 Einzel-LED, als besonders günstig erwiesen.

Weitere Vorteile, Merkmale und Einzelheiten der Erfindung ergeben sich aus der nachfolgenden Beschreibung bevorzugter Ausführungsbeispiele sowie anhand der Figuren; diese zeigen in:
- Fig. 1: ein Blockschaltbild einer LED-Netzteilvorrichtung gemäß einer ersten bevorzugten Ausführungsform der Erfindung;
- Fig. 2: ein Flussablaufdiagramm zum Verdeutlichen eines LadeBetriebsmodus des ausgangsseitigen Kondensators zur Betriebsspannungsversorgung der Steuereinheit während eines deaktivierten Betriebszustands (Standby) der angehängten LED-Last;
- Fig. 3: ein Signaldiagramm zum Verdeutlichen eines Verlaufs der Kondensatorspannung (obere Hälfte der Fig.3) im Standby-Zustand relativ zu durch die Steuereinheit geschalteten Ladungsimpulsen (untere Hälfte der Fig. 3);
- Fig. 4: ein Blockschaltbild analog Fig. 1 zum Verdeutlichen einer als gattungsbildend herangezogenen LED-Netzteilvorrichtung.

Für die weitere Beschreibung gelten die im Zusammenhang mit der Fig. 4 herangezogenen Bezugszeichen analog für korrespondierende Bauteile bzw. Funktionsgruppen.

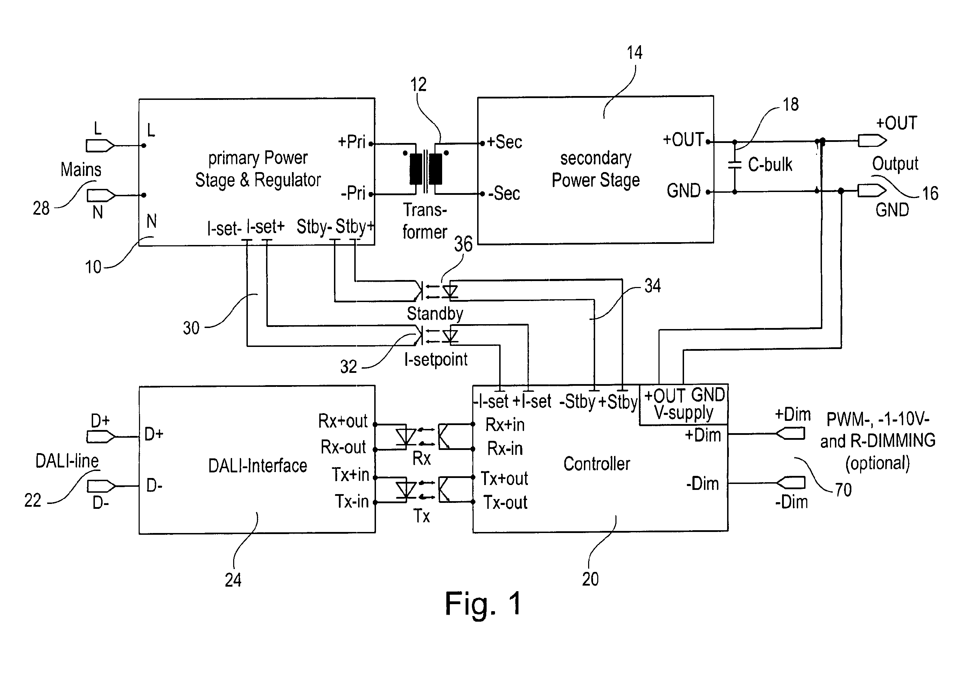

So zeigt die Fig. 1 als Ausführungsbeispiel der vorliegenden Erfindung eine Netzteilvorrichtung bestehend aus einer Primärstufe 10, einer dieser über eine Transformatoreinheit 12 nachgeschalteten Sekundärstufe 14 und einen ausgangsseitigen Glättungs- und Pufferkondensator (C BULK) 18. Der Kondensator 18 liegt parallel zu einem Paar von Ausgangsanschlüssen 16, an welchen das Anschließen einer LED-Leuchtmittelanordnung (nicht gezeigt) vorgesehen ist.

Im konkreten Beispiel würde eine solche LED-Leuchtmittelanordnung aus einer Reihenschaltung von typischerweise sechs Leistungs-LED bestehen, welche eine Lichtleistung von ca. 60 Watt ermöglichen. Die (kumulierte) Schwellenspannung dieser Anordnung liegt im Bereich von ca. 17 bis 18 Volt.

Wie im Ausführungsbeispiel der Fig. 1 gezeigt, realisiert die Primärstufe 10 der Netzteilmittel ein einstufiges Schaltnetzteil mit Leistungsfaktorkorrektur (PFC), als Reaktion auf ein Stromvorgabesignal, welches über ein Steuerleitungspaar 30 angelegt wird und, über eine Optokopplereinheit 32, von einer Steuereinheit 20 erzeugt wird, welcher, in der vorgeschriebenen Weise, eine DALI-Schnittstelle bestehend aus einem Schnittstellenmodul 24 und einem schnittstellenkonformen Zweidraht-Anschluss 22 vorgeschaltet ist. Zusätzlich ist die Steuereinheit 20 über eine Standby-Steuerleitung 34 (wiederum entkoppelt über Optokoppler 36) mit der Primärstufe 10 verbunden, wobei über diese Leitung, digital als An-Aus-Signal, die Netzteileinheit in einen Deaktivierungszustand der am Ausgang 16 angekoppelten LED-Last versetzt werden kann. (Optokoppler aktiv angesteuert → Netzteileinheit Aus)

In der praktischen Realisierung gibt es zahlreiche Möglichkeiten, die Netzteilmittel 10, 12, 14 zu realisieren (wobei, mit den exemplarisch angegebenen Parametern, der Kondensator 18 eine typische Kapazität von 18 000 µF aufweist); lediglich exemplarisch und als Realisierungsmöglichkeit für die Einheiten 10, 12, 14 sei auf die EP 2 259 415 A2 verwiesen (dort Fig. 1, insbesondere die Einheit 116, welche, wiederum weiter exemplarisch, in der Art der Fig. 1 der EP 2 270 965 realisiert sein kann). Vorteilhaft ermöglicht die primäre Leistungsstufe ein einstufiges Konzept mit PFC-Funktion, insbesondere ohne das Auftreten eines signifikanten Einschaitstromstoßes (da sich auf der Primärseite kein Energiespeicher befindet). So lässt sich vorteilhaft ein günstiger, am Netz wirksamer Lastfaktor erreichen, zusätzlich unterstützt von der nachfolgend zu erläuternden verringerten Belastung die Stromversorgung der Steuereinheit 20. Auch wird damit die Forderung eines maximal zulässigen Oberschwingungsanteiles des aus dem Netz aufgenommenen Stromes (Norm EN61000-3-2 class C für Beleuchtungseinrichtungen) erfüllt.

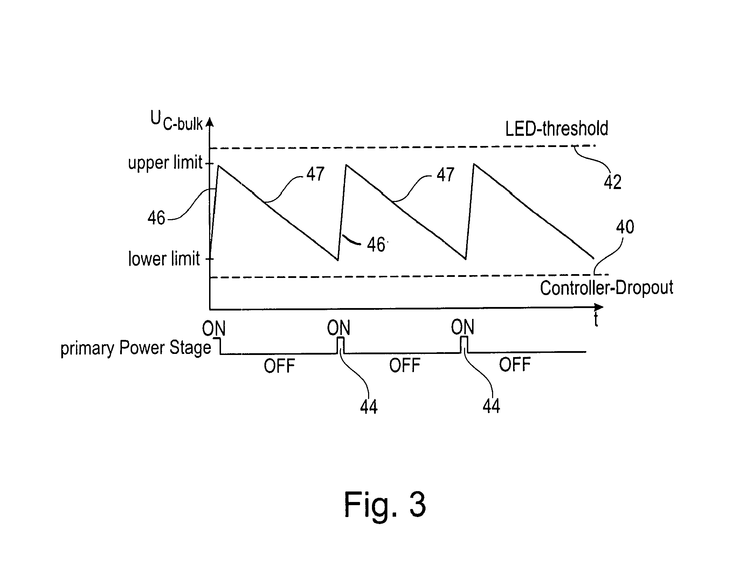

Die Steuereinheit, erfindungsgemäß vorteilhaft sekundärseitig vorgesehen, wird im Rahmen der Erfindung von der Kondensatorspannung des ausgangsseitigen Glättungs- und Pufferkondensators 18 gespeichert; diese wird, wie die Fig. 3 verdeutlicht, stets oberhalb eines Betriebsspannungsminimums (gestrichelte Linie 40) gehalten und, während des deaktivierten Leuchtzustands der LED-Leuchtmittel, auch unterhalb der (kumulierten) LED-Schwellenspannung 42.

Konkret erfolgt die Ladung der Kondensatoreinheit 18 wie folgt: in Form von bevorzugt regelmäßigen Impulsen der Netzteilanordnung 10, 12, 14 (Fig. 3, Impulse 44) wird während des in Fig. 3 gezeigten Standby-Betriebs der Kondensator 18 entsprechend einem steilen Rampenanstieg (ca. 2 bis 3 msec) 46 auf eine obere Rampenspannung (upper limit) geladen, welche mit ca. 15 Volt unterhalb der Schwellenspannung 42 (ca. 17 bis 18 Volt liegt). Mit Beendigung des Impulses fällt während der Impuls-Ausschaltdauer OFF (Tastverhältnis ON:OFF ca. 5%, bevorzugt weniger 2%, weiter bevorzugt bis gar unter 1 %) die Kondensatorspannung entlang der gezeigten längeren Rampe 47 (ca. 3 bis 5 sec) ab, bis, bevor die Kondensatorspannung die untere Betriebsschwelle 40 erreicht, ein Folgeimpuls 44 die Kondensatorspannung wieder anhebt.

Dies führt dazu, dass (während des diskutierten Standby- bzw. Ausschaltzustands der LED-Leuchtmittel am Ausgang 16) zwar während der ON-Perioden die Primärstufe 10 kurz aktiviert wird, während der OFF-Phasen jedoch die Netzteilmittel 10, 12, 14 deaktiviert sind. Da die mittlere Stromaufnahme der Steuereinheit wesentlich geringer ist als der nominale Laststrom zum Ansteuern der LED-Last, führt ein gemittelter Energieverbrauch dieses Spannungsversorgungsbetriebs (bei typischer Weise Einschaltdauer ON von weniger als 5%, im Optimalfall weniger als 1 % der Ausschaltdauer) zu einer sehr geringen, aus dem Netz aufgenommenen mittleren Leistung, welche insbesondere auch unterhalb von den einschlägigen Richtlinien geforderten Leerlauf-Leistungsaufnahme liegt.

Auf diese gezeigte Weise entfällt damit nicht nur der zusätzliche Schaltungsaufwand für eine (konventionell gesondert vorzusehende) Spannungsversorgungseinheit für die Steuereinheit 20, da ja nunmehr die Netzteilmittel selbst, in Verbindung mit der Kondensatoreinheit 18, die Rolle dieser Spannungsversorgungseinheit vornehmen, auch wird der üblicher Weise ohnehin notwendige und kapazitätsmäßig groß dimensionierte Glättungskondensator 18 synergistisch zusätzlich verwendet, um in der beschriebenen Weise vorteilhaft die Spannungsversorgung der Steuereinheit 20 zu ermöglichen.

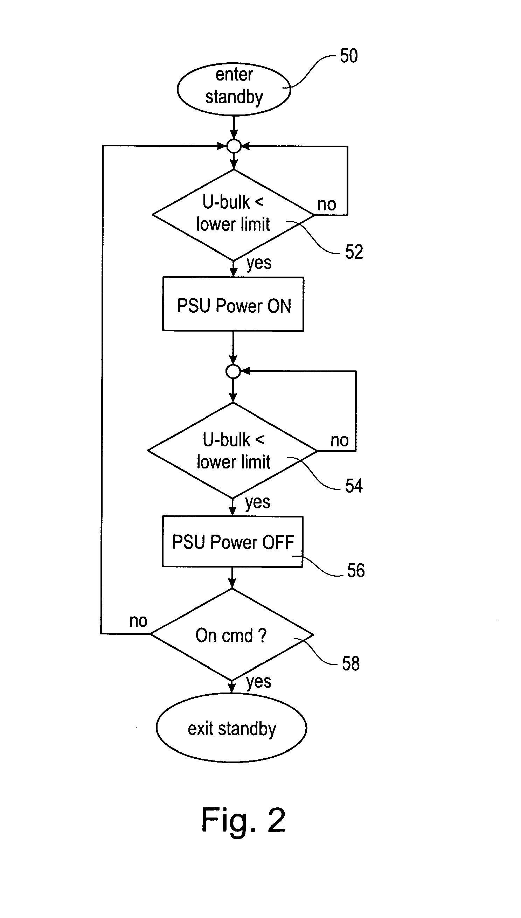

Die Figur 2 verdeutlicht einen Verfahrensablauf, welcher, typischer Weise realisiert mittels einer geeignet von der Steuereinheit 20 als Mikrocontroller abgeabgearbeiteten Software-Routine, diesen Stromversorgungs- und ladungsbetrieb im Standby-Modus ermöglicht:

Sobald ein Standby-Befehl 50 (entsprechend einem vorbestimmten Signalpegel) über die DALI-Schnittstelle 22, 24 zur Steuereinheit 20 geleitet wird, wird dort innerhalb einer ersten Entscheidungsschleife 52 überprüft, ob die Kondensatorspannung am Kondensator 18 (C-Bulk) unterhalb der Betriebsspannungsgrenze 40 für die Spannungsversorgung der Steuereinheit 20 liegt. Daraufhin erfolgt das Aktivieren der Primärstufe 10 durch die Steuereinheit 20 [über die Steuerleitung 34 ?], so dass, entsprechend dem ansteigenden Signal 46, die Kondensatorspannung steigt, bis, bei Erreichen bzw. Überschreiten der oberen Schwelle 42 im Entscheidungsschritt 54, der Ladevorgang beendet wird (Power OFF, Schritt 56). Solange dann, gemäß Entscheidungsschleife 58, die Netzteilvorrichtung im Standby—Betrieb verbleibt und nicht erneut eingeschaltet wird, verzweigt das Verfahren zurück zur Entscheidungsstufe 52.

Auf diese beschriebene Weise lässt sich so vorteilhaft erreichen, dass unterhalb einer Beleuchtungs- und Ansprechschwelle der Leuchtmittellast, durch Wirkung der eigentlichen Netzteilmittel (selbst und ohne zusätzliche Netzteileinheit) eine Betriebsspannungsversorgung der sich im Dauerbetrieb befindlichen Steuereinheit erfolgen kann, wobei, bedingt durch sehr kurze Einschaltzeiten der zur Aufrechterhaltung der Kondensatorladung bzw. Steuereinheit-Betriebsspannung notwendigen Mindestspannung, ein effektiver Leistungsverbrauch durch diesen zusätzlichen Betriebsmodus vernachlässigbar bleibt.

Dabei bietet die vorliegende Erfindung aufgrund der galvanischen Isolation des Controllers vom Netz zusätzlich vorteilhaft die Möglichkeit, etwa in der in Figur 1 gezeigten Weise die Steuereinheit mit einem zusätzlichen Eingangsanschluss 70 zu versehen, welcher, gemäß einer jeweiligen Konfiguration, mit einem Spannungs-, oder PWM-Signal oder einer Widerstands-Beschaltung versehen sein kann, um etwa einen Dimmbetrieb des Netzteils zu ermöglichen, falls keine DALI- (oder andere) Schnittstelle zur Steuerung des Leuchtmittels angeschlossen ist.

Auch ist die vorliegende Erfindung nicht auf das gezeigte Ausführungsbeispiel beschränkt, wobei insbesondere die vorliegende Erfindung zwar günstig für die Verwendung zusammen mit einer DALI-Schnittstelle, wie beschrieben, ist, jedoch auch beliebige andere Konfigurationen der Steuereinheit 20 vorgesehen sein können, um in der erfindungsgemäß günstigen Weise die permanente Betriebsspannungsversorgung (und damit Reaktionsbereitschaft) dieser Vorrichtung auch im Standby-Betrieb einer angehängten Last zu ermöglichen.

## Patentansprüche

1. LED-Netzteilvorrichtung mit ausgangsseitig zum Ansteuern von eine Schwellenspannung (42) aufweisenden LED-Mitteln ausgebildeteten Netzteilmitteln (10, 12, 14, 18), denen eine eine Ansteuerschnittstelle (22, 24) für extern anlegbare Steuersignale ausbildende Steuereinheit (20) zugeordnet ist, die eine mit einem Anschluss der Netzteilmittel verbundene Spannungsversorgungseinheit (18) so aufweist, dass die Steuereinheit in einem aktivierten sowie nicht-aktivierten Ansteuerzustand der LED-Mittel mit einer Betriebsspannung für einen Dauerbetrieb der Steuereinheit versorgt werden kann,
**dadurch gekennzeichnet,**
**dass** die Betriebsspannung als Kondensatorspannung von ausgangsseitig der Netzteilmittel vorgesehenen Kondensatormitteln (18) abgegriffen wird, die durch Wirkung der Steuereinheit (20) so durch impulsförmiges Ansteuern der Netzteilmittel geladen werden, dass in dem nicht-aktivierten Ansteuerzustand eine maximale Lade- und/oder Kondensatorspannung unterhalb der Schwellenspannung (42) liegt.

2. Vorrichtung nach Anspruch 1,
**dadurch gekennzeichnet,**
**dass** die Kondensatormittel (18) einen ausgangsseitig parallel zu den LED-Mitteln liegende, eine Glättung einer Netzteil-Ausgangsspannung bewirkende Pufferkondensator (18) aufweisen.

3. Vorrichtung nach Anspruch 1 oder 2,
**dadurch gekennzeichnet,**
**dass** die Steuereinheit so eingerichtet ist, dass durch das impulsförmige Ansteuern eine minimale Kondensatorspannung oberhalb einer Mindest-Betriebsspannung (40) der Steuereinheit verbleibt.

4. Vorrichtung nach einem der Ansprüche 1 bis 3,
**dadurch gekennzeichnet,**
**dass** die Steuereinheit so eingerichtet ist, dass das impulsförmige Ansteuern in regelmäßigen Zeitabständen erfolgt und/oder eine Impulsdauer des Ansteuern im nicht-aktivierten Ansteuerzustand der LED-Mittel kleiner als 10%, bevorzugt kleiner als 5%, weiter bevorzugt kleiner als 2%, einer zugehörigen Periodendauer beträgt.

5. Vorrichtung nach einem der Ansprüche 1 bis 4,
**dadurch gekennzeichnet,**
**dass** die Netzteilmittel eine durch die Steuereinheit angesteuerte Primärstufe (10) sowie eine von der Primärstufe mittels eines Transformators (12) getrennte, Gleichrichtmittel aufweisende sowie die Ausgangsseite ausbildende Sekundärseite (14) aufweisen.

6. Vorrichtung nach Anspruch 5,
**dadurch gekennzeichnet,**
**dass** die Primärstufe (10) einstufig ausgebildet ist und/oder Mittel zur Leistungsfaktorkorrektur aufweist.

7. Vorrichtung nach einem der Ansprüche 1 bis 6,
**dadurch gekennzeichnet,**
**dass** mindestens eine Steuerleitung (30 und/oder 34) zu den Netzteilmitteln, insbesondere von der Steuereinheit zu einer Primärstufe der Netzteilmittel, galvanisch entkoppelt ausgebildet ist.

8. Vorrichtung nach einem der Ansprüche 1 bis 7,
**dadurch gekennzeichnet,**
**dass** die Steuereinheit eine Ansteuerschnittstelle (24, 22) nach dem DALI-Standard realisiert.

9. Vorrichtung der anderen Ansprüche 1 bis 8,
**dadurch gekennzeichnet,**
**dass** die Steuereinheit einen Steuereingang (70) zur Helligkeitssteuerung der LED-Mittel aufweist, der insbesondere mit einem puisweitenmoduiierten Steuersignal, einer Steuerspannung oder einem elektrischen Widerstandswert beschaltbar ist.

10. Vorrichtung der anderen Ansprüche 1 bis 9,
**dadurch gekennzeichnet,**
**dass** die LED-Mittel als Reihenschaltung einer Mehrzahl von Einzel-LEDs, insbesondere von zwischen 3 und 20, bevorzugt zwischen 4 und 12) Einzel-LEDs ausgebildet sind.
